# EUROPÄISCHE PATENTSCHRIFT

(11) **EP 4 508 741 B1**
(45) Veröffentlichungstag und Bekanntmachung des Hinweises auf die Patenterteilung: **11.03.2026**
(21) Anmeldenummer: 23723562.7
(22) Anmeldetag: 04.05.2023
(51) Int. Cl.: H02K 9/22, H02K 3/50, H02K 11/33

(54) **ELEKTROMOTOR**
ELECTRIC MOTOR
MOTEUR ÉLECTRIQUE

(30) Priorität: 14.06.2022 EP 22178976
(43) Veröffentlichungstag der Anmeldung: 19.02.2025
(73) Patentinhaber: Innomotics GmbH, 90441 Nürnberg (DE)
(72) Erfinder: BRÜTTING, Frank, 91054 Erlangen (DE)
(74) Vertreter: Michalski Hüttermann & Partner Patentanwälte mbB
(86) Internationale Anmeldenummer: PCT/EP2023/061842
(87) Internationale Veröffentlichungsnummer: WO 2023/241854

(56) Entgegenhaltungen:
- EP-A1- 3 719 975
- DE-A1- 102017 112 993
- DE-A1- 102019 113 237
- DE-A1- 102020 113 555

## Beschreibung

Die Erfindung betrifft einen Elektromotor mit einer ständerseitigen Stabwicklung.

Elektromotoren können ständerseitig eine Stabwicklung aufweisen. Dabei weist der Ständer (Stator) eine Reihe von Stäben anstelle von gewickelten Drahtleitern als Feldleiter auf. Die Stäbe weisen im Vergleich zu herkömmlichen Wicklungen eine geringe Induktivität auf. Daher ist für die Erzeugung eines vorgegebenen Magnetfelds ein vergleichsweise hoher Stromfluss erforderlich. Ein Motor dieser Bauart ist in der EP19167289 A1

Dieser hohe Stromfluss erfordert aber durch den geringen Widerstand der Stäbe nur eine vergleichsweise geringe Spannung von beispielsweise 12 V. Die geringe Spannung ermöglicht es, die Komponenten der Wechselrichter, mit denen die Stäbe angesteuert werden, in geringen Abständen zueinander anzuordnen. So können die Komponenten der Leistungselektronik beispielsweise auf einer oder mehreren Platinen (Leiterplatten) angeordnet werden, die nahe am Elektromotor angeordnet werden. Die Stäbe können dabei direkt oder über elektrisch leitende stabartige Verbindungselemente direkt als mechanischer Träger der Platinen verwendet werden.

Die Leiterplatten sind dabei auf Kühlplatten montiert und über elektrische Stromschienen einzelnen kontaktiert. Dabei liegen die Stromschienen auf den Leiterplatten und sind mit diesen über Schraubenverbindungen kontaktiert. Die Schraubenverbindungen sind allerdings auch in den Kühlplatten (von dieser mechanisch entkoppelt) befestigt, um eine sichere Kontaktierung herzustellen. Hieraus stellt sich jeweils das Problem der Isolierung zwischen der Schraubverbindung und der Kühlplatte was für jede einzelne Schraubenverbindung durch eine entsprechende Hülse gelöst werden muss. Insbesondere wenn eine Leiterplatte aufgrund defekter Einzelbauteile gewechselt werden muss, müssen die in der Regel zwei Stromschienen die bis zu 150 Leiterplatten einspannen und mit Strom versorgen, abgeschraubt werden und anschließend wieder vollständig isoliert und aufgeschraubt werden.

Die Dokumente EP3719975 A1, DE102019113237 A1, DE102017112993 A1, DE102020113555 A1, offenbaren Elektromotoren, die ständerseitig eine Stabwicklung aufweisen und eine Mehrzahl von Leistungselektronikbauteilen zur Ansteuerung der Feldleiter aufweisen.

Der Erfindung liegt die Aufgabe zugrunde, einen Elektromotor mit einer ständerseitigen Stabwicklung sowie einer integrierten Leistungselektronik bereitzustellen, der gegenüber dem Stand der Technik einen niedrigeren Reparaturaufwand beim Austausch von Leiterplatten der Leistungselektronik erfordert.

Die Lösung der Aufgabe besteht in einem Elektromotor mit den Merkmalen des Patentanspruchs 1.

Dieser Elektromotor umfasst
- einen Stator mit einer Mehrzahl von als Stäbe ausgestalteten Feldleitern,
- eine Mehrzahl von Leistungselektronikbauteilen zur Ansteuerung der Feldleiter ,wobei
- die Leistungselektronikbauteile auf einer oder mehreren Leiterplatten angeordnet sind, und
- wenigstens eine Leiterplatte, die auf wenigstens einer Kühlplatte angeordnet ist,
- wobei die Kühlplatte so angeordnet ist, dass die Feldleiter mit Stromleitern, die mit den Feldleitern elektrisch verbunden sind, mit der Kühlplatte in mechanischer Wirkverbindung stehen. Die Stromleiter bilden demnach stromleitende Verbindungselemente zwischen den Feldleitern und den Leiterplatten und schlussendlich zu den Leistungselektronikbauteilen (auch Halbleiterschalter). Diese haben aufgrund der mechanischen Wirkverbindung auch eine tragende Eigenschaft für die Kühlplatte, wobei sie gegenüber dieser elektrisch isoliert sind.
- wobei in der Kühlplatte mindestens eine nutartige Vertiefung ausgespart ist, in der mindestens eine Stromschiene bezüglich der Kühlplatte elektrisch isoliert angeordnet ist,
- und dabei von den Leiterplatten zumindest teilweise abgedeckt ist und
- die Leiterplatten mit der mindestens einen Stromschiene elektrisch kontaktiert sind.

Der beschriebene Elektromotor unterscheidet sich dabei von herkömmlichen Elektromotoren darin, dass der Ständer (Stator) eine Reihe von Stäben anstelle von gewickelten Drahtleitern als Feldleiter aufweist. Die Stäbe weisen im Vergleich zu herkömmlichen Wicklungen eine geringe Induktivität auf. Daher ist für die Erzeugung eines vorgegebenen Magnetfelds ein vergleichsweise hoher Stromfluss erforderlich.

Aus dem Aufbau der Stabwicklung ergeben sich grundlegende Vorteile im Betrieb der Maschine: Durch die segmentweise Steuerbarkeit des magnetischen Flusses zwischen je zwei Feldleitern können weit flexiblere Formen an Magnetfeldern in die Maschine eingeprägt werden, als es mit einer verteilten Wicklung und deren inhärenten Überlagerungseffekten möglich wäre. Hierdurch ergeben sich viele (regelungstechnische) Vorteile im Hinblick auf die Laufeigenschaften der Maschine. Weiterhin zieht der Ausfall einer Phase ((der Ansteuerung) eines Feldleiters) weitaus geringere Folgen nach sich, als es z.B. bei einer doppel-dreiphasigen oder gar normalen dreiphasigen Maschine der Fall wäre. Da diese Effekte zudem von den benachbarten Phasen sehr gut kompensiert werden können, sinkt mit jedem Phasenausfall bei entsprechender Ausregelung fast ausschließlich die Antriebsleistung um nur einen kleinen Bruchteil, ohne die restlichen Eigenschaften nennenswert zu beeinflussen.

Der Vorteil gegenüber dem Stand der Technik von Motoren dieser Bauart besteht bei dem beschriebenen Elektromotor darin, dass die Stromschienen nicht auf den Leiterplatten angeordnet sind, sondern in der Kühlplatte versenkt vorliegen. Auf diese Weise kann jede Leiterplatte einzelnen durch Lösen der Verschraubung, die in der Regel auch die Kontaktierung mit den Stromschienen darstellt, ohne großen Aufwand entfernt und ausgetauscht werden. Somit muss also für eine Reparatur nicht große Teile oder sogar der gesamte Aufbau von allen Leiterplatten zerlegt werden, was bei Reparaturarbeiten an der Leistungselektronik eine erhebliche Einsparung des Arbeitsaufwandes bedeutet und somit einen Kostenvorteil darstellt. Die Reparaturkosten werden deutlich erleichtert.

Ferner ist durch diese konstruktive Ausgestaltung die Isolierung zwischen der Kühlplatte und der Stromschiene technisch mit geringerem Aufwand herzustellen, da die Kontaktierung nur zwischen der Leiterplatte und der Stromschiene erfolgt. Die Stromschiene selbst kann bezüglich der Kühlplatte mittels herkömmlichen Isoliermaterials isoliert werden. Die vorher übliche Verschraubung mit der Kühlplatte kann gegebenenfalls entfallen, was eine weitere Reduktion des Montageaufwands bedeutet.

Dabei ist es zweckmäßig, wenn in der Vertiefung zwei Stromschienen angeordnet sind. Das ist daher vorteilhaft, da auf diese Weise die Fläche der nutförmigen Vertiefung, die konstruktiv nicht zur Ableitung von Wärme aus der Leiterplatte zur Verfügung steht, reduziert werden kann. Dabei können zwei Stromschienen in der Vertiefung radial zu einer Motorachse nebeneinander angeordnet sein. Dies ermöglicht die Führung von zwei Stromschienen in einer Vertiefung bei einem geringen Aufwand für die Isolierung zwischen Kühlplatte und Stromschienen.

In einer weiteren Ausgestaltung sind zwei Stromschienen in der Vertiefung entlang der Motorachse übereinander angeordnet, was bei der Kontaktierung zwar einen höheren Aufwand erfordert, allerdings dazu geeignet ist, die Breite der Vertiefung gering zu halten und somit eine größere Fläche für die Wärmeabfuhr bereitzustellen.

Andererseits kann es zweckmäßig sein, dass mindestens zwei Vertiefungen vorgesehen sind, in denen jeweils mindestens eine Stromschiene verläuft. Auf diese Weise lassen sich bestimmte Bereiche der Leiterplatten gezielt kontaktieren.

Ferner kann es auch zweckmäßig sein, dass die Kühlplatte als eine Stromschiene ausgestaltet ist. Das bedeutet, dass die Vertiefung einen möglichst geringen Anteil der Oberfläche der Kühlplatte beansprucht und zumindest eine Stromschiene darin verläuft. Die Kühlplatte, sofern sie metallisch ausgestaltet ist, kann die Funktion der zweiten Stromschiene übernehmen. Hierdurch wird der Montageaufwand und der Demontageaufwand noch einmal reduziert.

Hierbei ist zu berücksichtigen, dass man allgemein für den beschriebenen Motor nicht zwingend genau zwei Stromschienen verwendet. Vorteilhaft ist es auch, duplizierte Potentiale oder z.B. drei Potentiale mit Zwischenkreis-Mittelpunkt oder doppelte (redundante) Zwischenkreise zu verwenden, wobei mehr als zwei Stromschienen benötigt werden. Durch die Nutzung der Kühlplatte als Stromschiene entfällt somit eine Stromschiene.

In einer vorteilhaften Ausgestaltungsform der Erfindung ist die Kühlplatte ringförmig ausgestaltet. Auf diese Weise kann sie bauraumsparend in den Elektromotor integriert werden. In diesem Zusammenhang ist es auch zweckmäßig, dass die Stromschiene ringförmig oder ringsektorförmig ausgebildet ist. Sie verläuft dann entlang der Kontur der Kühlplatte und der darauf angepassten Leiterplatten.

Des Weiteren kann es zweckmäßig sein, dass die Stromschiene mittels eines isolierenden flexiblen Materials in der Vertiefung verklemmt ist. Ein derartiges flexibles und isoliertes Material kann beispielsweise ein profilierter Silikonring oder ein auch thermisch beständiges und elektrisch isolierendes Glasfasergewebe sein.

Des Weiteren ist es dann auch zweckmäßig, wenn die Leiterplatten mit der mindestens einer Stromschiene mittels einer Verschraubung elektrisch kontaktiert sind.

Die Leiterplatten können kreis- oder ringsektorförmig ausgestaltet sein. Leiterplatten mit dieser Form lassen sich zu einem Kreis oder Ring zusammensetzen und somit optimal an die Form der elektrischen Maschine angepasst an einem axialen Ende der Maschine anordnen, wobei gleichzeitig eine hohe Modularität erreicht wird.

Die Begriffe "axial", "radial" und "tangential" beziehen sich dabei auf die Achse des Rotors und damit auf die entsprechende Symmetrieachse des Stators. Dabei beschreibt "axial" eine Richtung parallel zu dieser Achse, "radial" beschreibt eine Richtung orthogonal zur Achse, auf diese zu oder auch von ihr weg, und "tangential" ist eine Richtung, die in konstantem radialem Abstand zur Achse und bei konstanter Axialposition kreisförmig um die Achse herum gerichtet ist. Der Ausdruck "in Umfangsrichtung" ist mit "tangential" gleichzusetzen.

Werden die Begriffe "axial", "radial" und "tangential" in Bezug auf eine Fläche verwendet, bspw. eine Querschnittsfläche, beschreiben die Begriffe die Orientierung des Normalenvektors der Fläche, d.h. desjenigen Vektors, der senkrecht auf der betroffenen Fläche steht.

Weitere Ausgestaltungsformen der Erfindung und weitere Merkmale werden anhand der folgenden Figuren näher erläutert. Dabei handelt es sich um rein schematische Ausgestaltungsformen, die keine Einschränkung des Schutzbereichs darstellen.

Dabei zeigen:
- Figur 1: einen Elektromotor mit Kühlplatten zur Entwärmung von Leiterplatten in Seitenansicht,
- Figur 2: den Elektromotor in Frontansicht,
- Figur 3: eine vergrößerte Darstellung der Figur 1 im Ausschnitt der Kühlplatten in Seitenansicht mit Stromschienen nach dem Stand der Technik,
- Figur 4: der gleiche Ausschnitt wie in Figur 3 mit modifizierter Anordnung der Stromschienen,
- Figur 5: einen Querschnitt durch eine Kühlplatte mit Leiterplatten und in zwei nutartige Vertiefungen versenkten Stromschienen,
- Figur **6,**: einen Querschnitt wie in Figur 5 mit übereinander angeordneten Stromschienen in einer Vertiefung,
- Figur **7,**: einen Querschnitt wie in Figur 5 und in Figur 6 mit einer einzigen Vertiefung und zwei darin angeordneten Stromschienen und
- Figur 8: einen Teil-Querschnitt durch eine Kühlplatte, die schematisch eine Verschraubung zwischen Stromschiene und Leiterplatte zeigt.

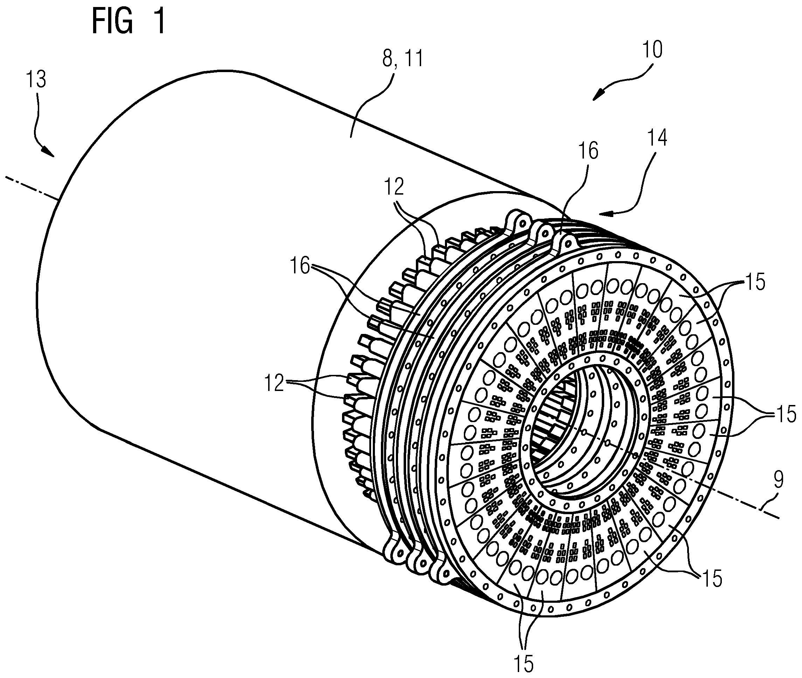

Figur 1 stellt eine isometrische Ansicht eines Elektromotors 10 dar, der ein Ausführungsbeispiel für die Erfindung ist. Der Elektromotor 10 umfasst einen Stator 11 und einen im Wesentlichen im Stator 11 angeordneten Rotor, der in Figur 1 nicht sichtbar ist. Der Rotor ist drehfest mit einer Welle verbunden, die ebenfalls in Figur 1 nicht dargestellt ist. Durch elektromagnetische Wechselwirkung des Rotors mit einem bestromten Stator 11 wird der Rotor um eine Achse 9 in Drehung versetzt. Der Rotor ist dabei vom Stator 11 durch einen Luftspalt getrennt.

In anderen Ausführungsformen kann es sich bei dem Elektromotor 10 auch um einen Außenläufermotor oder Glockenankermotor handeln.

Der Stator 11 umfasst als Feldleiter eine Mehrzahl von starren und geraden Leiterstäben 12. Diese Leiterstäbe 12 sind auf der in Figur 1 abgewandten Stirnseite 13 über einen Kurzschlussring miteinander verbunden. Auf der Rückseite 14 des Elektromotors 10 werden die Leiterstäbe 12 durch jeweils zugehörige Wechselrichtermodule einzeln gespeist. Da es sich bedingt durch die Leiterstäbe 12 um einen bei niedrigen Spannungen betriebenen Elektromotor 10 handelt, können die Wechselrichtermodule zusammen mit anderen Komponenten der Elektronik (Gleichspannungswandler, Gleichrichter) verhältnismäßig eng zusammen auf Leiterplatten 15 angeordnet sein. Die Leiterplatten 15 sind dabei in diesem Beispiel ringsektorförmig und viele einzelne Platinen 15 bilden zusammen eine ringförmige Platinenstruktur aus. Die starr ausgebildeten Leiterstäbe können dabei aus einem metallischen Stab, beispielsweise einem Kupferstab oder durch einen festen Multifilamentleiter ausgebildet sein.

Während in den Beispielen davon ausgegangen wird, dass die Platinen 15 Wechselrichtermodule tragen, ist es auch möglich, dass ein Teil der Platinen 15 Gleichrichter und DC/DC-Wandler tragen.

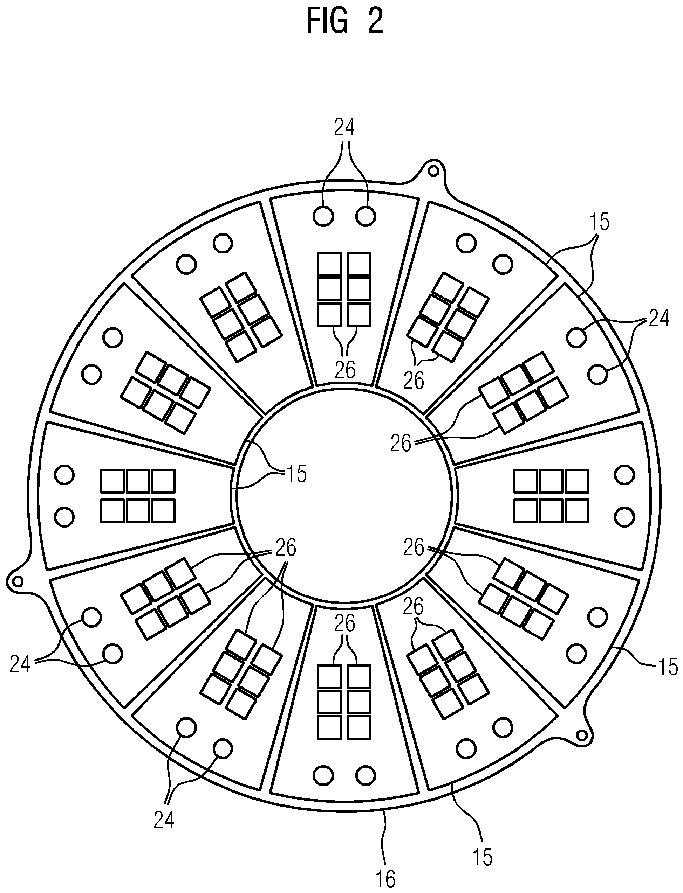

Figur 2 zeigt eine Aufsicht auf eine solche Platinenstruktur. Die Anzahl der in Figur 2 dargestellten Platinen ist dabei für eine bessere Übersichtlichkeit gegenüber dar Darstellung in Figur 1 verringert und stark vereinfacht dargestellt. Die konkrete Anzahl an solchen Platinen 15 hängt von der konkreten Ausgestaltung des Elektromotors 10 ab, insbesondere der Anzahl der Leiterstäbe 12. Jede der Platinen 15 umfasst mehrere Leistungselektronikbauteile, insbesondere Halbleiterschalter 26.

Weiterhin kann ein Teil der Platinen 15 oder alle Platinen 15 in den Figuren nicht dargestellte Treiberschaltungen und andere elektronische Komponenten wie Kondensatoren umfassen. Die Halbleiterschalter 26 sind Leistungshalbleiter wie beispielsweise IGBTs, MOSFETs oder JFETs und können abhängig von der Verschaltung zusätzlich nicht gezeigte Dioden umfassen. Die Halbleiterschalter 26 sind beispielsweise als Halbbrücken verschaltet. Ein nicht gezeigter Kondensator kann beispielsweise einen Zwischenkreiskondensator der Halbbrücken darstellen. Die Halbleiterschalter 26 einer Platine 15 können dabei einer einzelnen Phase zugeordnet sein oder aber mehreren Phasen.

Die Platinen 15 umfassen weiterhin Kontaktstellen 24, an denen die Leiterstäbe 12 angeschlossen sind. Die Platinen 15 werden von scheibenförmigen Kühlplatten 16 getragen, wobei für eine bessere Platzausnutzung die Kühlplatten 16 beidseitig mit Platinen 15 belegt sein können.

Da bei dem Elektromotor 10 gegenüber herkömmlichen Motoren mit Wicklungen verhältnismäßig hohe Ströme in den Leiterstäben nötig sind, sind bevorzugt mehrere Wechselrichter zu deren Bestromung parallelgeschaltet. Dies kann beispielsweise dadurch erreicht werden, dass die in Figur 1 gezeigten sechs Platinenstrukturen auf drei Kühlplatten 16 alle gleichartig an die Leiterstäbe 12 angeschlossen sind und somit elektrisch parallel angebunden sind. Dabei wird ausgenutzt, dass die Leiterstäbe 12 oder Verbindungselemente 18 zu den Leiterstäben 12 die Kühlplatten 16 und damit auch die Platinen 15 gleichartig an den Kontaktstellen durchdringen oder im Falle der äußersten Kühlplatte 16 zumindest kontaktieren.

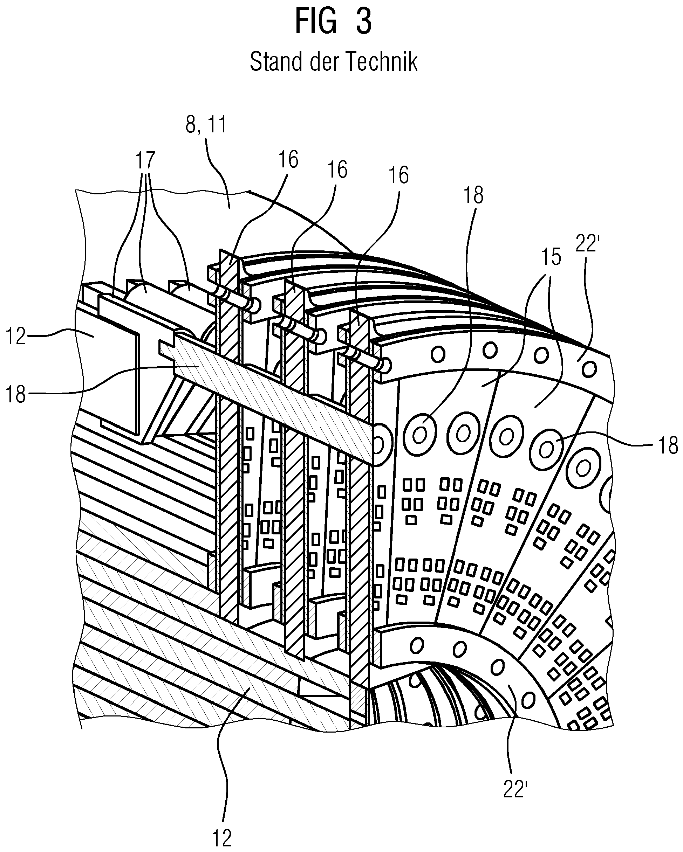

Figur 3 zeigt ein Schnittbild des Elektromotors 10 in Schrägansicht. Hierbei ist zu erkennen, dass die Verbindungselemente 18 die drei Kühlplatten 16 mechanisch tragen und durchdringen. Die Verbindungselemente 18 sind über Schuhe 17 mit den Leiterstäben 12 verbunden. Die Wechselrichter, die auf den Leiterplatten 15 in den Bereichen liegen, in denen eines der Verbindungselemente 18 eine Kühlplatte 16 durchdringt, sind parallelgeschaltet und stellen gemeinsam den Strom für den Leiterstab 12 bereit.

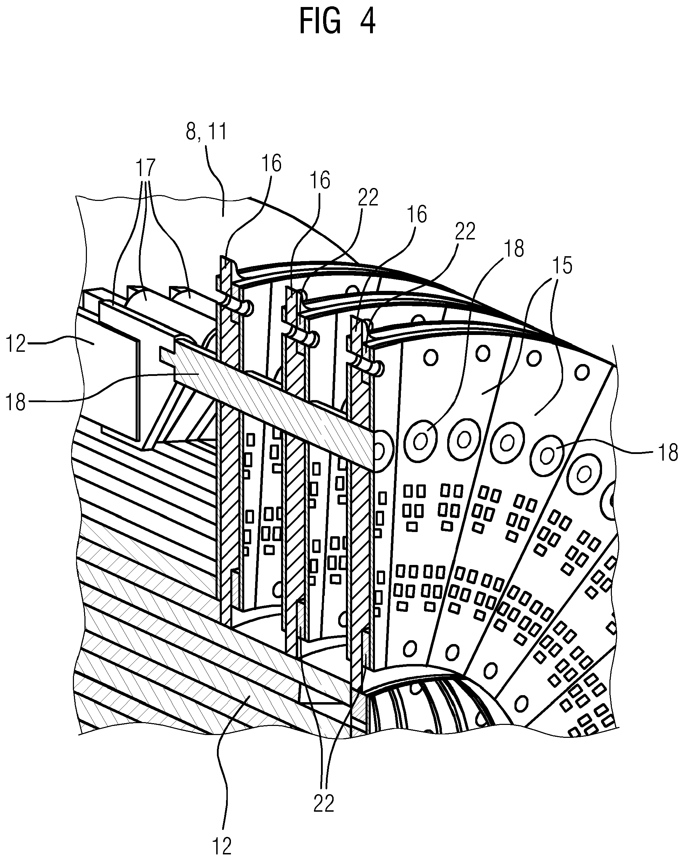

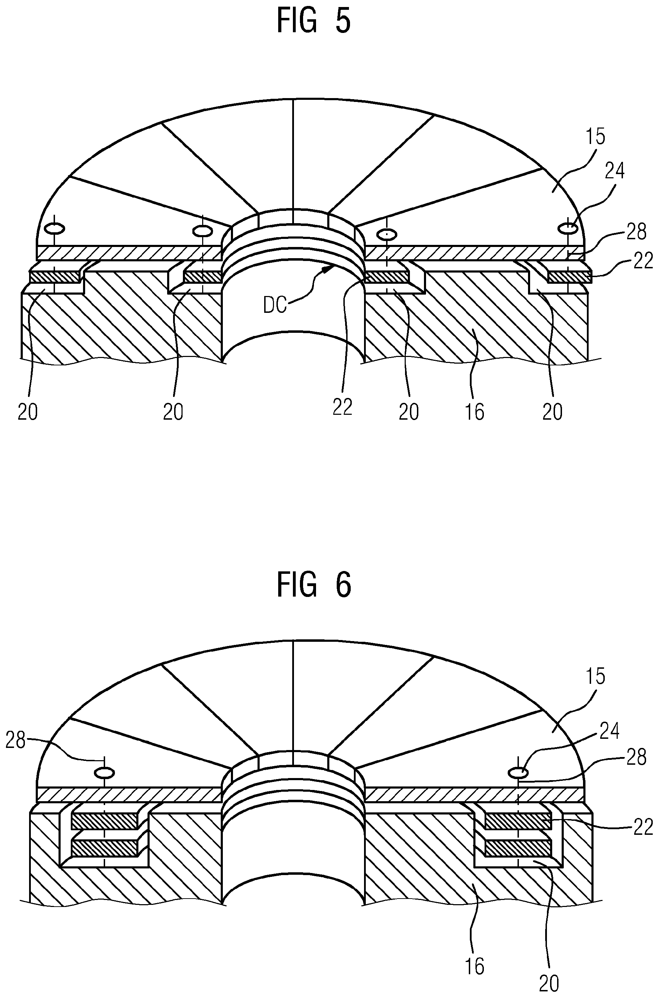

In Figur 3 sind auch Stromschienen 22' in der Ausgestaltungsform nach dem Stand der Technik dargestellt. Diese sind auf den Leiterplatten 15 aufgeschraubt und befestigen diese damit auf der Kühlplatte 16. Wenn nun eine Leiterplatte 15 defekt ist und ausgetauscht werden muss, müssen die Stromschienen 22 mit allen einzelnen Verschraubungen zu den Leiterplatten 15 entfernt werden. D. h., dass bei beispielsweise hundert Leiterplatten 15 mit je drei Verschraubungen 28 dreihundert Verschraubungen 28 gelöst werden müssen. Dieser Aufwand wird durch die Ausgestaltung gemäß Figur 4, und im Weiteren schematisiert und vergrößert dargestellt in den Figuren 5 bis 8, reduziert.

In Figur 4 ist die gleiche Anordnung wie in Figur 3 bezüglich der Stromschienen 22 in der Art ausgestaltet, dass diese unterhalb der Leiterplatten 15 in Vertiefungen 20 der Kühlplatte 16 angeordnet sind. Die Übersichtsdarstellung gemäß Figur 4 veranschaulicht die grundsätzliche Lage der Stromschienen 22, die in den Figuren 5-8 zwar schematisch aber vergrößert dargestellt sind.

Figur 5 zeigt schematisch einen Querschnitt durch eine Kühlplatte 16 mit darauf montierten Leiterplatten 15 sowie Vertiefungen 20, in denen die Stromschienen 22 angeordnet sind. Die Kontaktierung wird in der Figur 5 durch die Punkte 24 angedeutet. In Figur 5 sind demnach zwei Vertiefungen 20 vorgesehen, in denen die Stromschienen 22 getrennt voneinander verlaufen. Eine Vertiefung 20 ist dabei in einem radial äußeren Bereich der Kühlplatte 16 angeordnet, eine zweite Stromschiene 22 ist dabei in einem radial inneren Bereich der Kühlplatte 16 angeordnet. Die Stromschienen 22 verlaufen dabei weit voneinander getrennt, die Kontaktierung erfolgt an den jeweils äußeren Enden der Leiterplatten 15.

In Figur 5 ist die Stromschiene jeweils komplett durch die Leiterplatte 15 abgedeckt. In einigen Ausgestaltungsformen der Erfindung, die hier nicht grafisch dargestellt sind, kann die Stromschiene 22 aber an den Rändern über die Kühlplatte 16 hinausragen und lediglich teilweise durch die Leiterplatte 15 abgedeckt sein. In diesem Fall wäre die Vertiefung an einem Außenrand der Kühlplatte offen und nur an einer Seite in der Kühlplatte flankiert. Wichtig ist jedoch, wie dies in allen Betrachtungen der Figuren 4 - 8 der Fall ist, dass die Stromschiene 22 in einer Vertiefung 20 zwischen der Leiterplatte 15 und der Kühlplatte 16 liegt und somit durch das Lösen lediglich der Verschraubung 28 einer Leiterplatte 15 entnommen werden und ausgetauscht werden kann. Es muss nicht der gesamte Ring der Stromschiene 22 von allen Leiterplatten 15 abgeschraubt werden, wenn lediglich eine Leiterplatte 15 ausgetauscht werden muss. Dabei ist anzumerken, dass unter Verschraubung 28 jede lösbare Verbindung mit einer elektrischen Kontaktierung verstanden werden kann. Auch ein entsprechend ausgestalteter Bolzen kann dabei unter dem Begriff Verschraubung subsumiert werden. Eine technisch besonders günstige Ausgestaltungsform für eine derartige Kontaktierung ist jedoch das Einbringen einer metallischen Schraube.

Im Gegensatz dazu ist gemäß Figur 6 nur eine Vertiefung 20 in der Kühlplatte 16 vorgesehen, in der zwei Stromschienen 22 übereinander, allerdings voneinander elektrisch isoliert, angebracht sind. Auch hier ist eine Kontaktierung durch die Kontaktstelle 24 vorgesehen, wobei hierbei die Kontaktierung isoliert voneinander jeweils mit einer der Stromschienen 22 besteht. Der Vorteil des Aufbaus gemäß Figur 6 gegenüber dem der Figur 5 besteht darin, dass lediglich eine Vertiefung 20 vorgesehen ist und somit mehr Auflagefläche zwischen der Leiterplatte 15 und der Oberfläche der Kühlplatte 16 zur Abfuhr von Wärme bereitsteht. Allerdings ist in diesem Aufbau gemäß Figur 6 ein höherer Aufwand zur Isolierung der Kontaktierung und der beiden Stromschienen 22 zueinander zu betreiben. Die Verschraubung 28 ist in den Figuren 5-7 lediglich sehr schematisch durch eine gestrichelte Linie angedeutet.

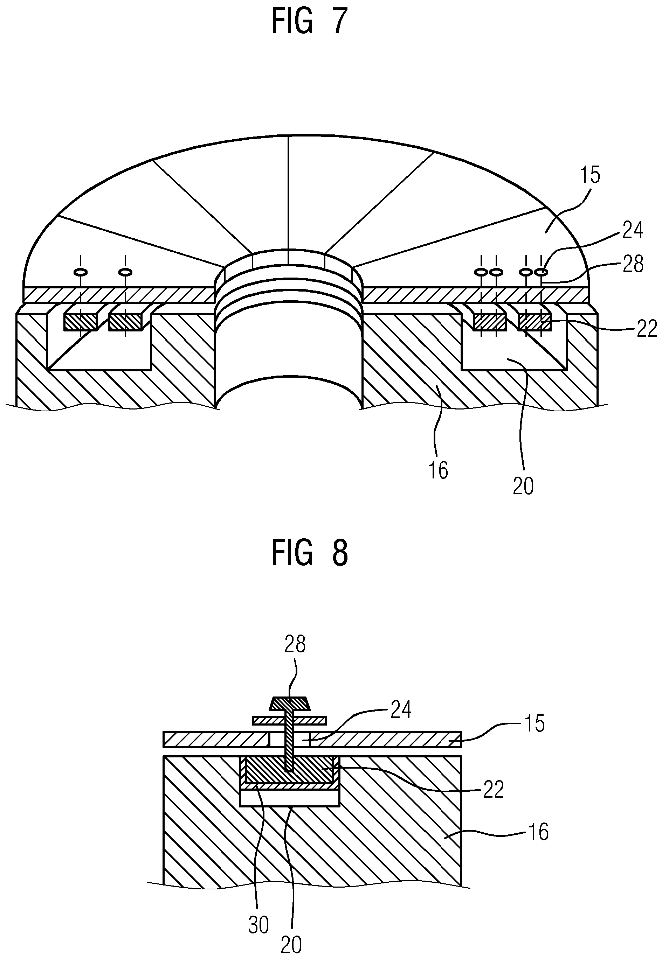

In einer weiteren alternativen Ausgestaltungsform gemäß Figur 7 ist ebenfalls nur eine Vertiefung 20 vorgesehen, die radial um einen Mittelpunkt der Kühlplatte 16 verläuft. In dieser sind jedoch zwei Stromschienen 22 nebeneinander angeordnet. Hierbei ist eben nur eine Vertiefung 20 notwendig, diese wird zur Positionierung von zwei Stromschienen 22 nebeneinander jedoch breiter ausgestaltet sein als die vergleichbare Vertiefung 20 in Figur 6.

In Figur 8 ist ebenfalls sehr schematisch die Kontaktierung zwischen der Stromschiene 22 und der Leiterplatte 15 skizziert. Dabei wird die Verschraubung 28 durch eine zumindest teilweise elektrisch leitfähige Kontaktstelle 24 geführt, wobei diese Verschraubung 28 in die Stromschiene 22 eingeschraubt ist, sodass über die Verschraubung 28 von der Stromschiene 22 an die Kontaktstelle 24 ein elektrischer Strom fließen kann. Ferner ist in Figur 8 noch eine Isolierung 30 dargestellt, die die Stromschiene 22 von der Kühlplatte 16 elektrisch isoliert. Hierbei kann es sich um ein flexibles Material, beispielsweise um eine Silikon-Matte handeln, die auch dazu beitragen kann, die Stromschienen 22 in die Vertiefung 20 einzudämmen und diese da zu fixieren. Die Ausgestaltung gemäß Figur 8 kann auch dazu dienen, lediglich eine Stromschiene 22 zu verwenden und die elektrisch leitende Kühlplatte 16 als zweite stromführende Einheit zu verwenden. Die Kühlplatte 16 übernimmt somit die Aufgabe einer zweiten Stromschiene 22. Dies vereinfacht die Kontaktierung und spart eine Stromschiene 22 ein.

### Bezugszeichen

- 8: Stator/Rotor-Block
- 9: Motorachse
- 10: Elektromotor
- 11: Stator
- 12: Leiterstäbe
- 13: Stirnseite
- 14: Rückseite
- 15: Leiterplatten
- 16: Kühlplatte
- 17: Schuh
- 18: Verbindungselement
- 20: Vertiefung
- 22: Stromschiene
- 24: Kontaktstellen
- 26: Halbleiterschalter
- 28: Verschraubung
- 30: Isolierung

## Patentansprüche

1. Elektromotor (10) mit:
- einem Stator (11) mit einer Mehrzahl von als Stäbe ausgestalteten Feldleitern (12),
- einer Mehrzahl von Leistungselektronikbauteilen zur Ansteuerung der Feldleiter (12),
wobei
- die Leistungselektronikbauteile auf einer oder mehreren Leiterplatten (15) angeordnet sind, die an einem axialen Ende der Maschine angeordnet sind,
- wenigstens eine Leiterplatte (15) auf wenigstens einer Kühlplatte (16) angeordnet ist,
- die Kühlplatte (16) so angeordnet ist, dass die Feldleiter (12) mit den Feldleitern (12) elektrisch verbundenen Stromleitern (18) mit der Kühlplatte in mechanischer Wirkverbindung stehen,
- wobei in der Kühlplatte (16) mindestens eine nutartige Vertiefung (20) ausgespart ist, in der mindestens eine Stromschiene (22) bezüglich der Kühlplatte (16) elektrisch isoliert angeordnet ist,
- und dabei von den Leiterplatten (15) zumindest teilweise abgedeckt ist und
- die Leiterplatten (15) mit der mindestens einen Stromschiene (22) elektrisch kontaktiert sind.

2. Elektromotor nach Anspruch 1, **dadurch gekennzeichnet, dass** in der Vertiefung (20) mindestens zwei Stromschienen (22) angeordnet sind.

3. Elektromotor nach Anspruch 1 oder 2, **dadurch gekennzeichnet, dass** zwei Stromschienen (22) in der Vertiefung radial zu einer Motorachse (9) nebeneinander angeordnet sind.

4. Elektromotor nach Anspruch 1 oder 2, **dadurch gekennzeichnet, dass** zwei Stromschienen (22) in der Vertiefung entlang der Motorachse (9) übereinander angeordnet sind.

5. Elektromotor nach Anspruch 1, **dadurch gekennzeichnet, dass** mindestens zwei Vertiefungen vorgesehen sind, in denen jeweils mindestens eine Stromschiene verläuft.

6. Elektromotor nach Anspruch 1, **dadurch gekennzeichnet, dass** die Kühlplatte als eine zweite Stromschiene ausgestaltet ist.

7. Elektromotor nach einem der vorhergehenden Ansprüche, **dadurch gekennzeichnet, dass** die Kühlplatte ringförmig ausgestaltet ist.

8. Elektromotor nach einem der vorhergehenden Ansprüche, **dadurch gekennzeichnet, dass** die Stromschiene ringförmig ausgebildet ist.

9. Elektromotor nach einem der vorhergehenden Ansprüche, **dadurch gekennzeichnet, dass** die Stromschiene mittels eines isolierenden flexiblen Materials in der Vertiefung verklemmt ist.

10. Elektromotor nach einem der vorhergehenden Ansprüche, **dadurch gekennzeichnet, dass** die Leiterplatten (15) mit der mindestens einen Stromschiene (22) mittels einer Verschraubung elektrisch kontaktiert sind.

11. Elektromotor (10) nach einem der vorangehenden Ansprüche, bei dem die Leiterplatten (15) kreis- oder ringsektorförmig ausgestaltet sind.

12. Elektromotor (10) nach einem der vorangehenden Ansprüche, bei dem die Kühlplatte (16) senkrecht zur Achse (9) des Elektromotors (10) angeordnet ist.

13. Elektromotor (10) nach einem der vorangehenden Ansprüche, ausgestaltet, jeden der Feldleiter (12) mit einer eigenen Phase anzusteuern.

14. Elektromotor (10) nach einem der vorangehenden Ansprüche, bei der die Wechselrichter ausgestaltet sind zur Erzeugung einer Wechselspannung mit einer Amplitude von 200 V oder weniger, insbesondere 150 V oder weniger, insbesondere 50 V oder weniger.

## Claims

1. Electric motor (10) having:
- a stator (11) having a plurality of field conductors (12) in the form of rods,
- a plurality of power electronics components for controlling the field conductors (12),
wherein
- the power electronics components are arranged on one or more printed circuit boards (15) located at an axial end of the machine,
- at least one printed circuit board (15) is arranged on at least one cooling plate (16),
- the cooling plate (16) is arranged in such a way that the field conductors (12) are mechanically operatively connected to the cooling plate via current conductors (18) that are electrically connected to the field conductors (12); and
- wherein at least one groove-like depression (20) is recessed in the cooling plate (16), in which depression at least one busbar (22) is arranged so as to be electrically insulated from the cooling plate (16)
- and is least partially covered by the printed circuit boards (15), and
- the printed circuit boards (15) are electrically contact-connected to the at least one busbar (22).

2. Electric motor according to Claim 1, **characterized in that** at least two busbars (22) are arranged in the depression (20).

3. Electric motor according to Claim 1 or 2, **characterized in that** two busbars (22) in the depression are arranged next to one another radially to a motor axis (9).

4. Electric motor according to Claim 1 or 2, **characterized in that** two busbars (22) in the depression are arranged above one another along the motor axis (9).

5. Electric motor according to Claim 1, **characterized in that** at least two depressions are provided, in each of which at least one busbar runs.

6. Electric motor according to Claim 1, **characterized in that** the cooling plate is in the form of a second busbar.

7. Electric motor according to any one of the preceding claims, **characterized in that** the cooling plate is ring-shaped.

8. Electric motor according to any one of the preceding claims, **characterized in that** the busbar is ring-shaped.

9. Electric motor according to any one of the preceding claims, **characterized in that** the busbar is clamped in the depression by means of an insulating flexible material.

10. Electric motor according to any one of the preceding claims, **characterized in that** the printed circuit boards (15) are electrically contact-connected to the at least one busbar (22) by means of a screw connection.

11. Electric motor (10) according to any one of the preceding claims, in which the printed circuit boards (15) are in the shape of a circle or a ring sector.

12. Electric motor (10) according to any one of the preceding claims, in which the cooling plate (16) is arranged perpendicular to the axis (9) of the electric motor (10).

13. Electric motor (10) according to any one of the preceding claims, designed to control each of the field conductors (12) with its own phase.

14. Electric motor (10) according to any one of the preceding claims, in which the inverters are designed to generate an AC voltage with an amplitude of 200 V or less, in particular 150 V or less, in particular 50 V or less.

## Revendications

1. Moteur électrique (10) comprenant :
- un stator (11) comprenant une pluralité de conducteurs de champ (12) réalisés sous forme de barres,
- une pluralité de composants électroniques de puissance destinés à exciter les conducteurs de champ (12),
- les composants électroniques de puissance étant disposés sur une ou plusieurs cartes à circuit imprimé (15) qui sont disposées à une extrémité axiale de la machine,
- au moins une carte à circuit imprimé (15) étant disposée sur au moins une plaque de refroidissement (16),
- la plaque de refroidissement (16) étant disposée de telle sorte que les conducteurs de champ (12) ainsi que des conducteurs électriques (18) qui relient électriquement les conducteurs de champ (12) se trouvent en liaison fonctionnelle mécanique avec la plaque de refroidissement,
- au moins une cavité (20) en forme de rainure étant ménagée dans la plaque de refroidissement (16), dans laquelle est disposée au moins une barre omnibus (22) isolée électriquement par rapport à la plaque de refroidissement (16),
- et étant ici recouverte au moins partiellement par les cartes à circuit imprimé (15) et
- les cartes à circuit imprimé (15) étant mises en contact électrique avec l'au moins une barre omnibus (22) .

2. Moteur électrique selon la revendication 1, **caractérisé en ce qu'**au moins deux barres omnibus (22) sont disposées dans la cavité (20).

3. Moteur électrique selon la revendication 1 ou 2, **caractérisé en ce que** deux barres omnibus (22) sont disposées l'une à côté de l'autre dans la cavité radialement par rapport à un axe de moteur (9).

4. Moteur électrique selon la revendication 1 ou 2, **caractérisé en ce que** deux barres omnibus (22) sont disposées l'une au-dessus de l'autre dans la cavité le long de l'axe de moteur (9).

5. Moteur électrique selon la revendication 1, **caractérisé en ce qu'**au moins deux cavités sont prévues, dans lesquelles s'étend respectivement au moins une barre omnibus.

6. Moteur électrique selon la revendication 1, **caractérisé en ce que** la plaque de refroidissement est conçue en tant que deuxième barre omnibus.

7. Moteur électrique selon l'une des revendications précédentes, **caractérisé en ce que** la plaque de refroidissement est conçue de forme annulaire.

8. Moteur électrique selon l'une des revendications précédentes, **caractérisé en ce que** la barre omnibus est réalisée sous forme annulaire.

9. Moteur électrique selon l'une des revendications précédentes, **caractérisé en ce que** la barre omnibus est serrée dans la cavité au moyen d'un matériau flexible isolant.

10. Moteur électrique selon l'une des revendications précédentes, **caractérisé en ce que** les cartes à circuit imprimé (15) sont mises en contact électrique avec l'au moins une barre omnibus (22) au moyen d'une liaison vissée.

11. Moteur électrique (10) selon l'une des revendications précédentes, avec lequel les cartes à circuit imprimé (15) sont conçues en forme de secteur de cercle ou d'anneau.

12. Moteur électrique (10) selon l'une des revendications précédentes, avec lequel la plaque de refroidissement (16) est disposée perpendiculairement à l'axe (9) du moteur électrique (10).

13. Moteur électrique (10) selon l'une des revendications précédentes, conçu pour exciter chacun des conducteurs de champ (12) avec une phase propre.

14. Moteur électrique (10) selon l'une des revendications précédentes, avec lequel les onduleurs sont conçus pour générer une tension alternative ayant une amplitude de 200 V ou moins, notamment de 150 V ou moins, notamment de 50 V ou moins.
